# EUROPEAN PATENT SPECIFICATION

(11) **EP 3 726 806 B1**
(45) Date of publication and mention of the grant of the patent: **09.08.2023**
(21) Application number: 18888135.3
(22) Date of filing: 12.12.2018
(51) Int. Cl.: H04L 67/12, H04W 12/03, G08C 17/02, H04W 4/44, H04L 9/40, H04L 67/125, H04L 67/53, H04L 67/55, H04L 67/562, H04L 69/326

(54) **METHOD FOR REMOTELY CONTROLLING VEHICLE ON THE BASIS OF SMART APPARATUS**
VERFAHREN ZUR FERNSTEUERUNG EINES FAHRZEUGS AUF DER BASIS EINER INTELLIGENTEN VORRICHTUNG
PROCÉDÉ DE COMMANDE À DISTANCE D'UN VÉHICULE SUR LA BASE D'UN APPAREIL INTELLIGENT

(30) Priority: 15.12.2017 CN 201711346191
(43) Date of publication of application: 21.10.2020
(73) Proprietor: NIO (Anhui) Holding Co., Ltd., Hefei City, Anhui Province (CN)
(72) Inventor: ZHU, Hao, Hong Kong (CN); SHI, Junjie, Hong Kong (CN); YU, Bin, Hong Kong (CN); ZHOU, Feng, Hong Kong (CN); LI, Yazhe, Hong Kong (CN); WENG, Yujian, Hong Kong (CN)
(74) Representative: Hansson Thyresson AB
(86) International application number: PCT/CN2018/120478
(87) International publication number: WO 2019/114732

(56) References cited:
- WO-A1-2016/178015
- WO-A1-2019/195673
- CN-A- 104 180 812
- CN-A- 104 363 266
- CN-A- 105 187 376
- CN-A- 105 491 084
- CN-A- 105 491 084
- US-A1- 2014 079 217
- US-A1- 2017 006 034

## Description

### Technical Field

The invention relates to the technical field of vehicles, and in particular to a method for remotely controlling a vehicle based on a smart device, a computer storage medium, a smart vehicle, and a telematics service provider.

### Background Art

Remote control of a vehicle is one of the important functions in Telematics services, and it is completed when the driver and passengers exit a vehicle, that is, the vehicle enters a shut-down status. These remote control functions comprise but are not limited to: functions of opening and unlocking a vehicle door, opening and closing a window, remotely starting up and shutting down the vehicle, remotely setting and turning on and off an onboard air conditioner, etc.

The remote vehicle control of an existing smart vehicle is substantially based on a short message channel, that is, sending a short message to the vehicle remotely. The short message pushing scheme is based on a store-and-forward mechanism, which makes the method have a poor real-time performance in service chain.

A Chinese patent Publication No. CN 102946636 A, entitled " 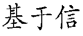 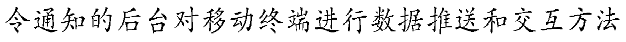 [Method for Pushing and Exchanging Data for Mobile Terminal at Back End Based on Signaling Notification]" and published on 27 February 2013, is disclosed in the prior art. In the Chinese patent, communication signaling is used as a notification manner of data pushing and exchange services, and a data back end transmits a notification request to a wireless terminal by using calling signaling and caller identification signaling; the wireless terminal uses rejection signaling or answering signaling or out-of-service signaling to indicate that the notification is invalid; after the wireless terminal hangs up or answers an incoming call from the data back end, one-time data downloading is performed from the data back end; and for a data pushing service, data pushing can be completed through the one-time data downloading, and for a data exchange service, the one-time data downloading involves the downloading of service instruction content, and the wireless terminal initiates data exchange with the data back end by parsing the service instruction content. This method not only facilitates improving the real-time performance, reliability and controllability of data communication, but also effectively saves on data resources. However, the invention only specifically discloses how to push and exchange data, but does not disclose how to remotely control a vehicle.

The information disclosed above in the section Background of the invention is only intended to facilitate understanding of the overall background of the invention, and should not be considered as an acknowledgment or any form of suggestion that the information constitutes the prior art already known to those of ordinary skill in the art.

US 2017/006034 A1 discloses a device of a public communication network initiates an action at a destination UE device of a private communication network by transmitting an action request message to a translating device that has a network/logical connection to both networks. The action request message contains security credentials of the initiating device. The translating device uses the security credentials of the initiating device contained in the action request message to determine a network address of the private network corresponding to the desired destination UE device. The security credentials may also be used to establish a secure connection from the initiating device. The translating device forwards the action request message to the desired destination device at the address associated with the initiator-device security credentials that it received in the action request message.

WO 2016/178015 A1 discloses a system comprising an agent system and a cloud platform. The agent system includes a device handler and a communications manager. The cloud platform includes: a receiver module; a platform management layer including a rules engine; a database; application programming interfaces (APIs), and a user interface. The agent system is configured to communicate with the receiver module via the communications manager, using a data model. The device handler is configured to communicate with a plurality of devices each including respective firmware, and to communicate with the communications manager. The receiver module is configured to receive event data generated by the respective firmware on the plurality of devices, and to pass event data to the database to be stored. The platform management layer is configured to process the event data according to the rules engine to generate output actions, commands or messaging. The APIs are connectable via the user interface to at least one other cloud platform component, which is operable via the APIs to push a command or new firmware to a connected device in the plurality of devices.

WO 2019/195673 A1 discloses a method and system for global device management architecture with regional autonomy for devices on a cellular network. The method for optimizing device management architecture for IoT devices includes providing device information to a server in a master node for registering a device with the master node; providing rules to assign the device to at least one node based on the device information; assigning the device to the at least one node in response to the rules; and automatically configuring the device to connect the device to the assigned node.

### Summary of the Invention

In order to solve at least one of the problems above in the prior art, the invention provides a method for remotely controlling a vehicle based on a smart device, a smart vehicle, and a telematics service provider defined by the appended independent claims. Additional features and advantages of the concepts disclosed herein are set forth in the dependent claims.

The method comprises: establishing a secure communication channel between the smart device and a telematics service provider (TSP); and sending, when a remote control function for an application of the smart device is triggered, a first request from the smart device to the TSP via the secure communication channel, such that the TSP subsequently pushes the first request to the vehicle by means of a message queuing telemetry transport (MQTT) protocol, the first request comprising a control instruction for the vehicle and user information, wherein the TSP and the vehicle communicate with each other by using a private access point name, and carry out two-way verification by using a transport layer security (TLS) protocol or a secure sockets layer (SSL) protocol.

In the above-mentioned method, the secure communication channel is a two-way TLS verification channel, which carries out two-way verification based on a cellular network and by using the transport layer security (TLS) protocol.

In the above-mentioned method, the TSP encapsulates the first request by using a protocol buffer (Protobuf) protocol.

The above-mentioned method may further comprise: receiving, by the smart device, an independent TLS user certificate issued by a public key infrastructure (PKI) before the secure communication channel is established.

The above-mentioned method may further comprise: requiring, by the application of the smart device, a user to perform verification with a gesture password or a fingerprint password when the application is switched from a back end back to a front end.

The above-mentioned method may further comprise: receiving a command execution result from the TSP, and updating the status of the vehicle with the application of the smart device if the command execution result indicates that the control instruction is executed successfully, otherwise prompting the user of the reason for failure.

The above-mentioned method may further comprise: issuing a query to the TSP by the smart device actively if the smart device has not received a response from the TSP within a predetermined period of time after the first request is sent to the TSP.

According to another aspect of the invention, a computer storage medium is provided, which comprises computer instructions that, when executed, carry out the method for remotely controlling a vehicle as described above.

According to a further aspect of the invention, a smart vehicle is provided, which comprises: a central gateway configured to establish a two-way TLS verification channel with a telematics service provider (TSP), such that the central gateway and the TSP communicate with each other by using a private access point name, and carry out two-way verification by using a transport layer security (TLS) protocol or a secure sockets layer (SSL) protocol, wherein the central gateway is configured to receive, from the TSP, a first request which is pushed by means of a message queuing telemetry transport (MQTT) protocol, the first request comprising a control instruction for the vehicle and user information, and the central gateway is further configured to parse the control instruction for the vehicle from the first request and transfer same to an electronic control unit; and the electronic control unit configured to receive the control instruction for the vehicle from the central gateway and perform a corresponding operation.

In the above-mentioned smart vehicle, the central gateway transfers the control instruction to the electronic control unit only when preconditions meet predetermined requirements, the preconditions comprising a vehicle network connection state and a current vehicle status.

In the above-mentioned smart vehicle, the electronic control unit sends an execution acknowledgment message to the central gateway after the execution of the control instruction.

In the above-mentioned smart vehicle, the central gateway is further configured to encapsulate the execution acknowledgment message and push the encapsulated execution acknowledgment message according to the message queuing telemetry transport (MQTT) protocol.

In the above-mentioned smart vehicle, the central gateway is further configured to monitor the result of pushing according to the MQTT protocol, wherein if the time for pushing exceeds a predetermined time, the central gateway is configured to transfer the control instruction to the electronic control unit again for re-execution.

According to yet another aspect of the invention, a telematics service provider (TSP) is provided, the TSP establishing a first secure communication channel with a smart device and establishing a second secure communication channel with a vehicle, the TSP comprising: a remote vehicle service component configured to receive, from the smart device and via the first secure communication channel, a first request comprising a control instruction for the vehicle and user information, and encapsulate the first request by using a protocol buffer (Protobuf) protocol; and a message platform configured to receive the encapsulated first request from the remote vehicle service component and push same to the vehicle via the second secure communication channel by means of a message queuing telemetry transport (MQTT) protocol, wherein the TSP and the vehicle communicate with each other by using a private access point name, and carry out two-way verification by using a transport layer security (TLS) protocol or a secure sockets layer (SSL) protocol.

In the above-mentioned telematics service provider (TSP), the remote vehicle service component is configured to perform authentication and determination of preconditions according to the first request, the preconditions comprising a vehicle network connection state and a current vehicle status.

In the above-mentioned telematics service provider (TSP), after the authentication and the determination of preconditions are performed, the remote vehicle service component is configured to generate a unique ID corresponding to the first request, return the unique ID to the smart device and write information in the first request to a database for query by the smart device.

The solution of the invention proposes a data channel protocol based on a cellular network, which can realize instant (second-order) data transmission while hardly makes the data transmission time obvious to a user as compared with the traditional short message channel. Additionally, the vehicle and the cloud (that is, the telematics service provider) communicate with each other by using a private APN, and carry out two-way TLS verification, thereby building a very robust security system. The use of two-way TLS verification can ensure that data cannot be tampered with and monitored during transmission; in addition, the use of the Private APN for transmission further physically cuts off the possibility of broker contact, thereby protecting channel security. Moreover, the use of the Protobuf protocol to encapsulate data in this solution can make speed faster and data smaller and more secure, and solve the problem of compatibility across devices. In addition, the use of the MQTT for two-way data transmission in this solution has a very low overhead, supports multiple languages, can adapt to requirements of transmission under various unstably working networks, makes it easy to develop, and ensures the stability, accessibility, and data reachability. Finally, this solution provides an asynchronous callback and compensation mechanism, which is extremely suitable for commands that take a long time to execute, can ensure the final consistency of feedbacks received by the user under various unstably working networks, and provides a good user experience.

Other features and advantages of the method and apparatuses in the invention will become apparent or can be set forth more specifically from the drawings herein and the following particular embodiments for explaining some principles of the invention together with the drawings.

### Brief Description of the Drawings

FIG. 1 is a schematic diagram representing a method for remotely controlling a vehicle based on a smart device according to one embodiment of the invention;
FIG. 2 is a schematic diagram representing the structure of a smart vehicle according to one embodiment of the invention;
FIG. 3 is a architecture diagram representing a system for remotely controlling a smart vehicle according to one embodiment of the invention;
FIG. 4 is a schematic diagram representing the structure of a telematics service provider (TSP) according to one embodiment of the invention; and
FIG. 5 is a diagram representing signaling for remotely controlling a smart vehicle according to one embodiment of the invention.

### Detailed Description of Embodiments

The following description describes specific embodiments of the invention to teach those skilled in the art how to make and use the best mode of the invention. In order to teach the principles of the invention, some conventional aspects have been simplified or omitted. Those skilled in the art should understand that variations derived from these embodiments will fall within the scope of the invention. Those skilled in the art should understand that the following features can be combined in various ways to form a plurality of variations of the invention. Thus, the invention is not limited to the specific embodiments described below, but only defined by the claims and their equivalents.

In the context of the invention, the term "smart device" refers to devices with computing processing power, e.g., a mobile phone, an IPAD, etc.

The term "TSP" is Telematics Service Provider, also referred to as a remote vehicle service provider. It occupies a core position in the Telematics industry chain, linking up with vehicles, onboard device manufacturers and network operators, and down with content providers. Telematics services integrate modern computer technologies such as location services, Gis services, and communication services, to provide powerful services for vehicle owners and individuals: navigation, entertainment, news, security and protection, SNS, remote maintenance, etc.

The term "MQTT" is Message Queuing Telemetry Transport, which is an instant messaging protocol. The protocol supports all platforms and can link almost all networked items to the outside. The MQTT protocol is a protocol designed for the communication of a large number of remote sensors and control devices which have a limited computing power and work in low-bandwidth and unreliable networks, and it has at least the characteristics of: (1) providing one-to-many message publishing and decoupling application programs by using a publish/subscribe message mode; (2) message transmitting that shields load content; (3) providing a network connection by using TCP/IP; and (4) providing three types of message publishing quality of service.

The term "TLS", Transport Layer Security, represents a transport layer security protocol. The protocol consists of two layers: a TLS record protocol and a TLS handshake protocol.

The term "SSL" is Secure Sockets Layer, which encrypts network connections with the SSL at a transport layer.

The term "Protobuf' is Protocol buffer, which is a data exchange format of Google, and is independent of languages and platforms. It is much faster than xml used for data exchange, because of taking a binary format. It can be used for data communication between distributed applications or data exchange in heterogeneous environments.

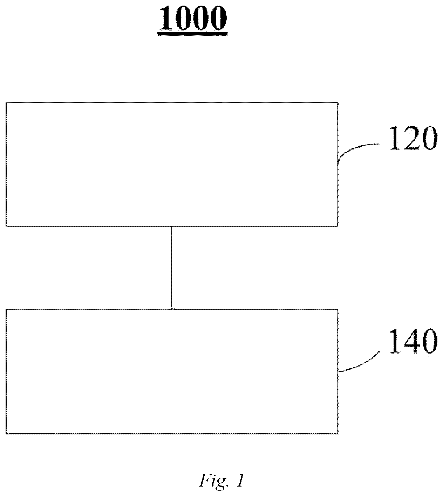

FIG. 1 represents a method 1000 for remotely controlling a vehicle based on a smart device according to one embodiment of the invention. As shown in FIG. 1, the method 1000 comprises the following steps:
in step 120, establishing a secure communication channel between the smart device and a telematics service provider (TSP).

In step 140, sending, when a remote control function for an application of the smart device is triggered, a first request from the smart device to the TSP via the secure communication channel, such that the TSP subsequently pushes the first request to the vehicle by means of a message queuing telemetry transport (MQTT) protocol, the first request comprising a control instruction for the vehicle and user information, wherein the TSP and the vehicle communicate with each other by using a private access point name, and carry out two-way verification by using a transport layer security (TLS) protocol or a secure sockets layer (SSL) protocol.

The use of the MQTT for two-way data transmission ensures stability, accessibility, and data reachability, and can adapt to requirements of transmission under unstably working networks. Additionally, the vehicle and the cloud (that is, the TSP) communicate with each other by using a private access point name (that is, the Private APN), and carry out two-way TLS verification, thereby building a very robust security system. The use of two-way TLS verification can ensure that data cannot be tampered with and monitored during transmission. In addition, the use of the private access point name for transmission further physically cuts off the possibility of broker contact, thereby protecting channel security.

In one embodiment, the secure communication channel is a two-way TLS verification channel, which carries out two-way verification based on a cellular network and by using the transport layer security (TLS) protocol. The secure communication channel based on a cellular data network can realize faster data transmission than that in the prior art.

In one embodiment, the TSP encapsulates the first request by using a protocol buffer (Protobuf) protocol. The use of the Protobuf protocol to encapsulate data can make speed faster and data smaller and more secure, and solve the problem of compatibility across devices.

In one embodiment, the method 1000 may further comprise: receiving, by the smart device, an independent TLS user certificate issued by a public key infrastructure (PKI) before the secure communication channel is established. In one embodiment, the method comprises requiring, by the application of the smart device, a user to perform verification with a gesture password or a fingerprint password when the application is switched from a back end back to a front end. In one embodiment, the method comprises receiving a command execution result from the TSP, and updating the status of the vehicle with the application of the smart device if the command execution result indicates that the control instruction is executed successfully, otherwise prompting the user of the reason for failure. In one embodiment, the method comprises issuing a query to the TSP by the smart device actively if the smart device has not received a response from the TSP within a predetermined period of time after the first request is sent to the TSP.

A person skilled in the art should understand that the method for remotely controlling a vehicle may be provided as a method, a system, or a computer program product. Therefore, the invention may take the form of hardware, software, or a combination thereof. Moreover, the invention may take the form of a computer program product that is implemented on one or more computer-usable storage media (including, but not limited to, a disk memory, an optical memory, and the like) that include computer-usable program codes.

According to another aspect of the invention, a computer storage medium is provided, which comprises computer instructions that, when executed, carry out the method for remotely controlling a vehicle as described above.

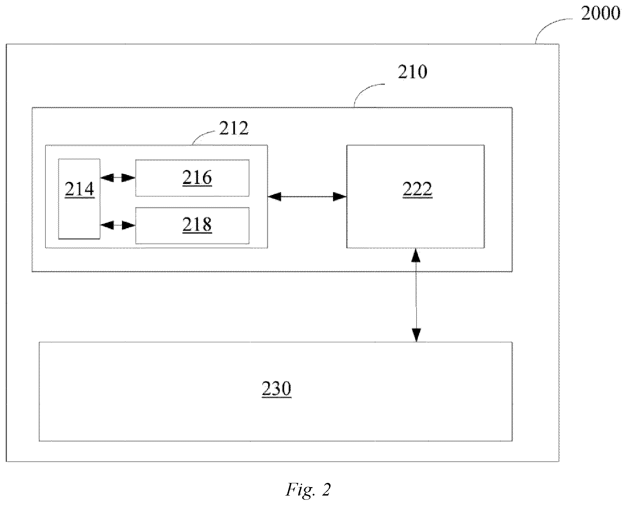

According to a further aspect of the invention, a smart vehicle is provided. With reference to FIG. 2, FIG. 2 is a schematic diagram representing the structure of a smart vehicle 2000 according to one embodiment of the invention. In FIG. 2, the smart vehicle 2000 comprises: a central gateway 210 and an electronic control unit 230. The central gateway 210 is configured to establish a two-way TLS verification channel with a telematics service provider (TSP), such that the central gateway and the TSP communicate with each other by using a private access point name, and carry out two-way verification by using a transport layer security (TLS) protocol or a secure sockets layer (SSL) protocol. The central gateway 210 is configured to receive, from the TSP, a first request which is pushed by means of a message queuing telemetry transport (MQTT) protocol, the first request comprising a control instruction for the vehicle and user information. The central gateway 210 is further configured to parse the control instruction for the vehicle from the first request and transfer same to an electronic control unit. The electronic control unit 230 is configured to receive the control instruction for the vehicle from the central gateway and perform a corresponding operation.

In one embodiment, the central gateway 210 transfers the control instruction to the electronic control unit 230 only when preconditions meet predetermined requirements, the preconditions comprising a vehicle network connection state and a current vehicle status.

In one embodiment, the electronic control unit 230 sends an execution acknowledgment message to the central gateway 210 after the execution of the control instruction.

In one embodiment, the central gateway 210 is further configured to encapsulate the execution acknowledgment message and push the encapsulated execution acknowledgment message according to the message queuing telemetry transport (MQTT) protocol.

In one embodiment, the central gateway 210 is further configured to monitor the result of pushing according to the MQTT protocol, and if the time for pushing exceeds a predetermined time, the central gateway 210 is configured to transfer the control instruction to the electronic control unit 230 again for re-execution.

In one embodiment, the central gateway 210 comprises a transmission control unit (TCU) 212 and a vehicle gateway 222 that is in two-way communication with the electronic control unit 230. The transmission control unit (TCU) 212 further comprises a TCU MQTT broker 214, a TSP agent 216, and a remote control application 218. In one implementation, the TSP agent 216 establishes a two-way TLS verification channel with the telematics service provider (TSP), and performs a two-way communication with the TCU MQTT broker through an internal TCU MQTT client. Similarly, the remote control application 218 performs two-way communication with the TCU MQTT broker through its internal TCU MQTT client.

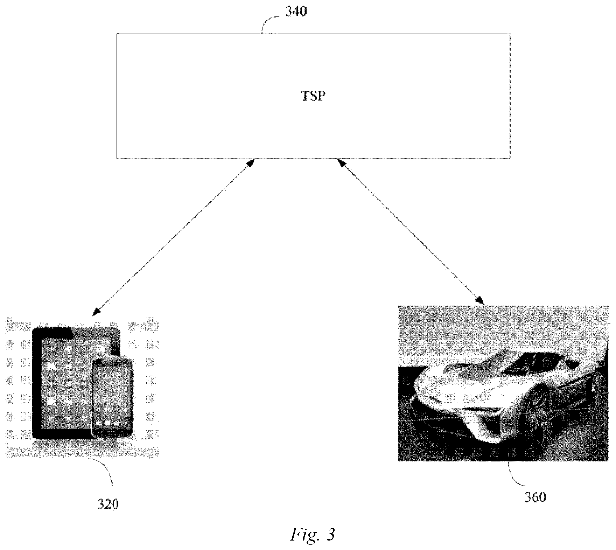

FIG. 3 shows an architecture diagram of a system for remotely controlling a vehicle. As shown in FIG. 3, a TSP 340 performs two-way (secure) communication with a smart device 320 and a vehicle 360, respectively. The solution of remotely controlling a vehicle in the invention effectively enables users with different identities (comprising a vehicle owner, an authorized user, an authorized factory service staff, and an authorized third-party service staff) to remotely control a vehicle on mobile phones in real time (second order), including remote unlocking/locking, remote setting of the temperature of an air conditioner, remote opening and closing of windows and a skylight, and remote turning on and off of lights.

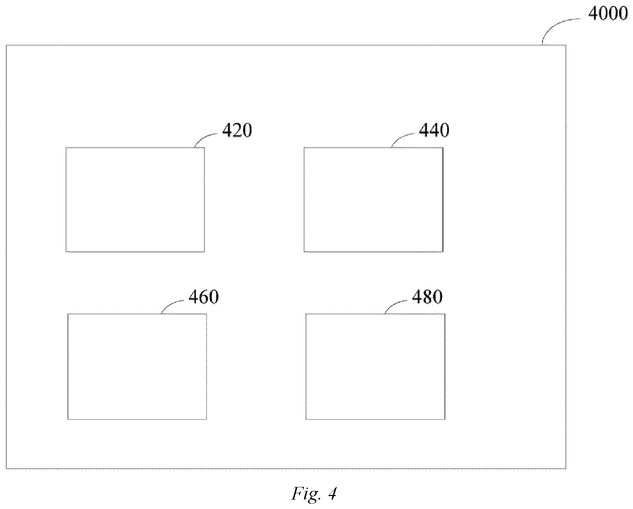

FIG. 4 is a schematic diagram representing the structure of a telematics service provider (TSP) 4000 according to one embodiment of the invention. With reference to FIGs. 3 and 4, the TSP (340, 4000) establishes a first secure communication channel with the smart device 320, and establishes a second secure communication channel with the vehicle 360. In one embodiment, the TSP 4000 comprises: a remote vehicle service component 420 and a message platform 440. The remote vehicle service component 420 is configured to receive, from the smart device and via the first secure communication channel, a first request comprising a control instruction for the vehicle and user information, and encapsulate the first request by using a protocol buffer (Protobuf) protocol. The message platform 440 is configured to receive the encapsulated first request from the remote vehicle service component and push same to the vehicle via the second secure communication channel by means of a message queuing telemetry transport (MQTT) protocol, wherein the TSP and the vehicle communicate with each other by using a private access point name, and carry out two-way verification by using a transport layer security (TLS) protocol or a secure sockets layer (SSL) protocol.

In one embodiment, the remote vehicle service component 420 is configured to perform authentication and determination of preconditions according to the first request, the preconditions comprising a vehicle network connection state and a current vehicle status.

In one embodiment, after the authentication and the determination of preconditions are performed, the remote vehicle service component 420 is configured to generate a unique ID corresponding to the first request, return the unique ID to the smart device and write information in the first request to a database for query by the smart device.

In one embodiment, the TSP 4000 may further comprise an audit service component 460 and a data collection service component 480.

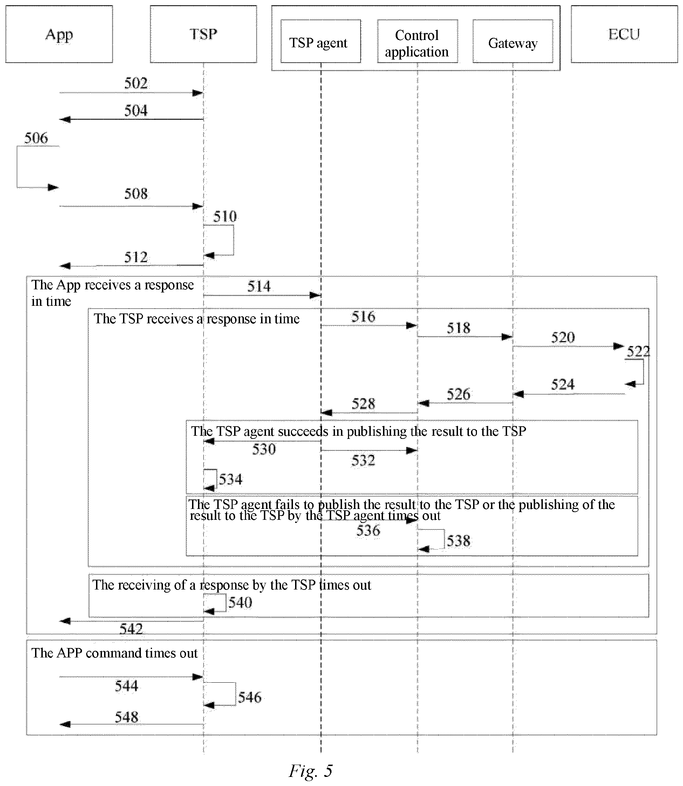

FIG. 5 is a diagram representing signaling for remotely controlling a smart vehicle according to one embodiment of the invention. In one application scenario, an owner/authorized user/authorized factory service staff/authorized third-party staff clicks on a remote control button for a designated vehicle on a Mobile APP to trigger the entire process of vehicle control.

First, a secure connection between the vehicle and a cloud (TSP) needs to be established. A central gateway of the vehicle needs to establish an MQTT persistent connection (reference may be made to the foregoing introduction for the MQTT protocol) with the cloud in advance, for issuing of a control command and reporting of vehicle status data information. For security reasons, this connection requires two-way TLS verification via a Private APN channel. Ideally, a keep-alive connection is maintained between the vehicle and the TSP, and reconnection will be performed in the event of a failure. The use of two-way TLS verification can ensure that data cannot be tampered with and monitored during transmission; in addition, the use of the Private APN for transmission further physically cuts off the possibility of broker contact, thereby protecting channel security.

In order to execute a remote control command between the mobile phone and the cloud, the user is required to install and log in an NIO APP. An Oauth 2.0 protocol is used for login. Additionally, each user will be issued an independent TLS user certificate by a PKI to establish a two-way TLS verification channel between the mobile phone and the cloud. When the application is switched from a back end to a front end, the user is also required to perform verification with a gesture password or a fingerprint password.

After the secure channels between the vehicle and the cloud, and between the mobile phone and the cloud are established, communication can be carried out thereon. The flowchart is as shown in FIG. 5.

The owner/authorized user/authorized NIO service staff/authorized third-party staff clicks, on the APP, the remote control button for the vehicle to which he/she has permission, and the APP will send an HTTPS API request (login request) to the TSP (502). As shown in FIG. 5, after receiving the HTTPS POST request, the TSP returns an access token to the user or APP (504), and then the APP needs to verify the user's fingerprint or gesture password (506). Next, the APP sends an HTTPS API POST request to the TSP (508), and the TSP performs further verification (510), and gives a feedback (512) (granted, rejected, or preconditions not satisfied, etc.). All the requests above are based on SSL two-way verification.

In one embodiment, after the command is submitted successfully, the Mobile APP waits for the TSP to push the command for execution. The Mobile APP needs to set a timeout period (for example, 20 s), and if no pushing message has been received beyond the period, the Mobile APP needs to actively initiate a query to the TSP (544). Then, the TSP queries a database for the command in step 546 and feeds back the result in step 548.

The processing of the control command by the TSP mainly comprises authentication, determination of vehicle preconditions, persistence, encapsulation of Protobuf format data, and issuing of a message through the MQTT protocol. The TSP needs to verify the user's login information and permission. If the user is not a login user or does not have permission to operate the vehicle, he or she will be rejected. The TSP needs to determine the network connection state of the target vehicle and the current vehicle status, and returns an error prompt if the requirements are not satisfied. After authentication and determination of preconditions, the TSP will generate a unique ID (command id) of the command in the TSP, and write details (such as a user ID, a vehicle ID, an APP ID, a command name, the type and parameters, time, etc.) of the command to a database. The ID is returned to the APP. The APP can use the ID for query later. The data transmitted between the TSP and the vehicle may be in the form of Google Protocol Buffer. The Protobuf protocol is defined in data structure 1-1. {command} field is used to indicate a specific command type, and {params} field is a list of parameters attached to each command. After the data is encapsulated, the TSP sends the data through the MQTT protocol to topic '/vehicles/{vin}/inbox' subscribed by the corresponding vehicle according to the vehicle ID. Reference can be made to step 514.

```
   Data structure 1-1
   message Control Command {
       optional int32 version = 1; // Protocol version
       optional int64 timestamp = 2; // server timestamp
       optional int64 ttl = 3; // command expiration
       optional string command_id = 4; // control command id
       optional string command = 5; // control command
       repeated Param params = 6; // parameters
       message Param {
   optional string key = 1;
   optional bytes value = 2;
       }
   }
```

So far, the delivery of the remote command is ended at the TSP side. The TSP needs to set a timeout period (less than the timeout period at the Mobile APP, e.g. 15s), and if no command execution result feedback is received by the TSP within the timeout period, the TSP needs to handle a timeout event. For example, in step 540, the TSP acquires a command result from the data collection service component and updates the command status.

The TSP agent in the central gateway receives the command by subscribing to topic '/vehicles/{vin}/inbox' of the MQTT Broker. After the command is received, it is necessary to determine whether preconditions required by the command are satisfied, and an error is directly returned if they are not satisfied. Then, the corresponding ECU module is notified to perform operations and receive the feedbacks 516, 518, 520, 522, 524, 526, and 528.

After the command is executed, the central gateway needs to encapsulate the result message according to the data structure 1-2. {command id} is a corresponding command ID; {status} indicates a command execution status, which will be one of 'success', 'failure' or 'running'; and. {fail reason} indicates the reason for failure, and there may be multiple reasons. After the command is executed, the relevant vehicle statuses will also be returned with the command execution results for subsequent analysis, such as air conditioner status {hvac_status}, door lock status {door status}, window status {window_status}, and light status {light status}. The encapsulated message is sent to topic '/vehicle/{vin}/outbox' of the MQTT Broker through MQTT (steps 530, 532), and the TSP will consume this message (534).

```
   Data structure 1-2
   message CommandResult {
       optional int32 version = 1; // Protocol version
       optional int64 timestamp = 2; // client timestamp
       optional string command _id = 4; // command id
       optional ResultStatus status = 2; // command result of execution
       repeated string fail reason = 3; // fail reason
       optional HVACStatus hvac_status = 4;
       optional DoorStatus door_status = 5;
       optional WindowStatus window_status = 6;
       optional LightStatus light status = 7;
       enum ResultStatus {
   SUCCESS = 0;
   FAILURE = 1;
   RUNNING = 2;
       }
   }
```

The vehicle needs to monitor the result of sending by means of the MQTT protocol, and if the sending time exceeds the TTL time after multiple retries, a compensation mechanism needs to be executed according to the command (536, 538). For example, if it is a command to close the door, and if the door has been opened, but the sending of the result to the cloud times out, the door needs to be closed again. By means of such a feedback compensation mechanism, it is ensured that the final result received by the user is consistent with the execution result for the vehicle.

In one embodiment, the TSP receives a command execution result data packet sent by the vehicle through topic '/vehicle/{vin}/outbox' of the MQTT protocol (MQTT), and parses same to acquire command execution result Protobuf data. After the Protobuf data is parsed, the record is made persistent, the corresponding control command record is updated according to {command id}, and the status of the corresponding vehicle is updated; and for a command that takes a long time to execute, this step will be repeated multiple times.

In one embodiment, if command execution is ended (the result of the command execution indicates 'success' or 'failure'), the TSP pushes the result to the Mobile APP (step 542). In one specific implementation, the result can be pushed by means of MQTT in an Android system, while pushed by means of APNs in an iOS system.

In one embodiment, if no feedback about the end of command execution is received by the TSP within the specified period (less than the timeout period at the APP, e.g., 15 s), the TSP will directly mark the result of the command as failure, with the reason for failure being timeout, and updates the corresponding control command record according to {command id}. At the same time, the TSP needs to push a warning containing timeout information to the APP to remind the user.

The APP needs to display the command execution result when receiving the message pushed by the system. If the command execution result indicates success, the vehicle status is updated on the Mobile APP, and if it indicates failure, the user is prompted of the reason for command failure. If no command pushing result has yet been received by the APP after the TTL expires, the query needs to be actively initiated through {command_id} (544). After the result is obtained, the command execution result is displayed, and the vehicle status is updated on the Mobile APP or the user is informed of the reason for failure.

In summary, in this solution, a secure data transmission channel is established on a private APN by means of an MQTT protocol and TLS, and Protobuf is used as a data transmission protocol. Thus, a user can remotely control a vehicle on a mobile phone in real time (second order), including remote unlocking/locking, remote setting of the temperature of an air conditioner, remote opening and closing of windows and a skylight, and remote turning on and off of lights. For time-consuming operations such as starting the air conditioner to a specified temperature, an asynchronous fault-tolerant mechanism is provided in this solution, which can ensure final consistency of command execution results in various situations.

Compared with the prior art, the technical solution of the invention makes data transmission extremely fast because the data transmission is based on a cellular data network and a long connection is used between the vehicle and the cloud. Additionally, in the technical solution of the invention, the vehicle and the cloud communicate with each other by using a private APN, and carry out two-way TLS verification, thereby building a very robust security system. The use of two-way TLS verification can ensure that data cannot be tampered with and monitored during transmission; in addition, the use of the Private APN for transmission further physically cuts off the possibility of broker contact, thereby protecting channel security, with an extremely high level of security. In addition, the use of the Protobuf protocol to encapsulate data in the technical solution of the invention can make speed faster and data smaller and more secure, and solve the problem of compatibility across devices. Furthermore, the use of the MQTT for two-way data transmission in the technical solution of the invention ensures stability, accessibility, and data reachability, and can adapt to requirements of transmission under unstably working networks. Finally, an asynchronous callback and compensation mechanism is provided in the technical solution of the invention, which is extremely suitable for commands that take a long time to execute, and can maintain the consistency of final data under unstably working networks.

The examples above mainly illustrate the method for remotely controlling a vehicle based on a smart device, the computer storage medium, the smart vehicle, and the telematics service provider according to the invention. Although only one or more embodiments of the invention are described, it will be appreciated by those skilled in the art that the invention may be implemented in many other forms without departing from the essence and scope thereof.

## Claims

1. A method (1000) for remotely controlling a vehicle (360) based on a smart device (320), the method comprising:
establishing (120) a secure communication channel between the smart device (320) and a telematics service provider, TSP, (340, 4000); and
sending (140), when a remote control function for an application of the smart device (320) is triggered, a first request from the smart device (320) to the TSP (340, 4000) via the secure communication channel, such that the TSP (340, 4000) subsequently encapsulates the first request by using a protocol buffer, Protobuf, protocol and pushes the first request to the vehicle (360) by means of a message queuing telemetry transport, MQTT, protocol, the first request comprising a control instruction for the vehicle (360) and user information,
wherein the TSP (340, 4000) and the vehicle (360) communicate with each other by using a private access point name, and carry out two-way verification by using a transport layer security, TLS, protocol or a secure sockets layer, SSL, protocol, and
wherein the secure communication channel is a two-way TLS verification channel, which carries out two-way verification based on a cellular network and by using the transport layer security, TLS, protocol.

2. The method (1000) according to claim 1, further comprising: receiving, by the smart device (320), an independent TLS user certificate issued by a public key infrastructure, PKI, before the secure communication channel is established.

3. The method (1000) according to claim 1, further comprising:
requiring, by the application of the smart device (320), a user to perform verification with a gesture password or a fingerprint password when the application is switched from a back end back to a front end.

4. The method (1000) according to claim 1, further comprising:
receiving a command execution result from the TSP (340, 4000), and
updating the status of the vehicle (360) with the application of the smart device (320) if the command execution result indicates that the control instruction is executed successfully, otherwise prompting the user of the reason for failure.

5. The method (1000) according to claim 1, further comprising:
issuing a query to the TSP (340, 4000) by the smart device (320) actively if the smart device (320) has not received a response from the TSP (340, 4000) within a predetermined period of time after the first request is sent to the TSP (340, 4000).

6. A computer storage medium, comprising computer instructions that, when executed, carry out the method (1000) for remotely controlling a vehicle (360) of any one of claims 1 to 5.

7. A smart vehicle (2000, 360), **characterized by** comprising:
a central gateway (210) configured to establish a two-way TLS verification channel with a telematics service provider, TSP, (340, 4000), such that the central gateway (210) and the TSP (340, 4000) communicate with each other by using a private access point name, and carry out two-way verification by using a transport layer security, TLS, protocol or a secure sockets layer, SSL, protocol, wherein the central gateway (210) is configured to receive, from the TSP (340, 4000), a first request which is pushed by means of a message queuing telemetry transport, MQTT, protocol, the first request comprising a control instruction for the vehicle (360) and user information and is encapsulated by the TSP (340, 4000) using a protocol buffer, Protobuf, protocol, and the central gateway (210) is further configured to parse the control instruction for the vehicle (360) from the first request and transfer same to an electronic control unit (220); and
the electronic control unit (220) configured to receive the control instruction for the vehicle (360) from the central gateway (210) and perform a corresponding operation.

8. The smart vehicle (2000, 360) according to claim 7, wherein the central gateway (210) transfers the control instruction to the electronic control unit (220) only when preconditions meet predetermined requirements, the preconditions comprising a vehicle network connection state and a current vehicle status.

9. The smart vehicle (2000, 360) according to claim 7, wherein the electronic control unit (220) sends an execution acknowledgment message to the central gateway (210) after the execution of the control instruction.

10. The smart vehicle (2000, 360) according to claim 9, wherein the central gateway (210) is further configured to encapsulate the execution acknowledgment message and push the encapsulated execution acknowledgment message according to the message queuing telemetry transport, MQTT, protocol.

11. The smart vehicle (2000, 360) according to claim 10, wherein the central gateway (210) is further configured to monitor the result of pushing according to the MQTT protocol, wherein if the time for pushing exceeds a predetermined time, the central gateway (210) is configured to transfer the control instruction to the electronic control unit (220) again for re-execution.

12. A telematics service provider, TSP, (340, 4000), the TSP (340, 4000) establishing a first secure communication channel with a smart device (320) and establishing a second secure communication channel with a vehicle (360), the TSP (340, 4000) comprising:
a remote vehicle service component (420) configured to receive, from the smart device (320) and via the first secure communication channel, a first request comprising a control instruction for the vehicle (360) and user information, and encapsulate the first request by using a protocol buffer (Protobuf) protocol; and
a message platform (440) configured to receive the encapsulated first request from the remote vehicle service component (420) and push same to the vehicle (360) via the second secure communication channel by means of a message queuing telemetry transport, MQTT, protocol, wherein the TSP (340, 4000) and the vehicle (360) communicate with each other by using a private access point name, and carry out two-way verification by using a transport layer security, TLS, protocol or a secure sockets layer, SSL, protocol.

13. The telematics service provider, TSP, (340, 4000) according to claim 12, wherein the remote vehicle service component (420) is configured to perform authentication and determination of preconditions according to the first request, the preconditions comprising a vehicle network connection state and a current vehicle status.

14. The telematics service provider, TSP, (340, 4000) according to claim 13, wherein after the authentication and the determination of preconditions are performed, the remote vehicle service component (420) is configured to generate a unique ID corresponding to the first request, return the unique ID to the smart device (320) and write information in the first request to a database for query by the smart device (320).

## Patentansprüche

1. Verfahren (1000) zur Fernsteuerung eines Fahrzeugs (360) auf der Grundlage einer intelligenten Vorrichtung (320), wobei das Verfahren umfasst:
Aufbauen (120) eines sicheren Kommunikationskanals zwischen der intelligenten Vorrichtung (320) und einem Telematikdienstanbieter, TSP, (340, 4000); und
Senden (140), wenn eine Fernsteuerungsfunktion für eine Anwendung der intelligenten Vorrichtung (320) ausgelöst wird, einer ersten Anforderung von der intelligenten Vorrichtung (320) an den TSP (340, 4000) über den sicheren Kommunikationskanal, derart, dass der TSP (340, 4000) anschließend die erste Anforderung unter Verwendung eines Protokollpuffer-, Protobuf-, Protokolls, einkapselt und die erste Anforderung mittels eines "Message Queuing Telemetry Transport"-, MQTT-, Protokolls an das Fahrzeug (360) pusht, wobei die erste Anforderung einen Steuerbefehl für das Fahrzeug (360) und Benutzerinformationen umfasst,
wobei der TSP (340, 4000) und das Fahrzeug (360) unter Verwendung eines Namens für einen privaten Zugangspunkt miteinander kommunizieren und Zwei-Wege-Verifizierung unter Verwendung eines "Transport Layer Security"-, TLS-, Protokolls oder eines "Secure Sockets Layer"-, SSL-, Protokolls durchführen, und
wobei der sichere Kommunikationskanal ein Zwei-Wege-TLS-Verifizierungskanal ist, der Zwei-Wege-Verifizierung auf der Grundlage eines zellularen Netzes und unter Verwendung des "Transport Layer Security", TLS-, Protokolls durchführt.

2. Verfahren (1000) nach Anspruch 1, ferner umfassend: Empfangen, durch die intelligente Vorrichtung (320), eines unabhängigen TLS-Benutzerzertifikats, das von einer "Public Key Infrastructure", PKI, ausgestellt ist, bevor der sichere Kommunikationskanal aufgebaut wird.

3. Verfahren (1000) nach Anspruch 1, ferner umfassend: Erfordern, durch die Anwendung der intelligenten Vorrichtung (320), dass ein Benutzer eine Verifizierung mit einem Gestenpasswort oder einem Fingerabdruckpasswort durchführt, wenn die Anwendung von einem Back-End zurück zu einem Front-End geschaltet wird.

4. Verfahren (1000) nach Anspruch 1, ferner umfassend:
Empfangen eines Befehlsausführungsergebnisses vom TSP (340, 4000), und
Aktualisieren des Status des Fahrzeugs (360) mit der Anwendung der intelligenten Vorrichtung (320), wenn das Befehlsausführungsergebnis angibt, dass der Steuerbefehl erfolgreich ausgeführt wurde, andernfalls Benachrichtigen des Benutzers über den Grund für das Fehlschlagen.

5. Verfahren (1000) nach Anspruch 1, ferner umfassend: aktives Ausgeben einer Anfrage an den TSP (340, 4000) durch die intelligente Vorrichtung (320), wenn die intelligente Vorrichtung (320) innerhalb einer vorbestimmten Zeitspanne nach dem Senden der ersten Anforderung an den TSP (340, 4000) keine Antwort vom TSP (340, 4000) empfangen hat.

6. Computerspeichermedium, umfassend Computerbefehle, die bei ihrer Ausführung das Verfahren (1000) zur Fernsteuerung eines Fahrzeugs (360) nach einem der Ansprüche 1 bis 5 durchführen.

7. Intelligentes Fahrzeug (2000, 360), **dadurch gekennzeichnet, dass** es folgende Elemente umfasst:
ein zentrales Gateway (210), das dafür ausgelegt ist, einen Zwei-Wege-TLS-Verifizierungskanal mit einem Telematikdienstanbieter, TSP, (340, 4000) aufzubauen, derart, dass das zentrale Gateway (210) und der TSP (340, 4000) unter Verwendung eines Namens für einen privaten Zugangspunkt miteinander kommunizieren und Zwei-Wege-Verifizierung unter Verwendung eines "Transport Layer Security"-, TLS-, Protokolls oder eines "Secure Sockets Layer"-, SSL-, Protokolls durchführen,
wobei das zentrale Gateway (210) dafür ausgelegt ist, vom TSP (340, 4000) eine erste Anforderung zu empfangen, die mittels eines "Message Queuing Telemetry Transport"-, MQTT-, Protokolls gepusht wird, wobei die erste Anforderung einen Steuerbefehl für das Fahrzeug (360) und Benutzerinformationen umfasst und vom TSP (340, 4000) unter Verwendung eines Protokollpuffer-, Protobuf-, Protokolls eingekapselt wird, und wobei das zentrale Gateway (210) ferner dafür ausgelegt ist, den Steuerbefehl für das Fahrzeug (360) aus der ersten Anforderung zu parsen und diesen an eine elektronische Steuereinheit (220) zu übertragen; und
die elektronische Steuereinheit (220) dafür ausgelegt ist, den Steuerbefehl für das Fahrzeug (360) vom zentralen Gateway (210) zu empfangen und eine entsprechende Operation durchzuführen.

8. Intelligentes Fahrzeug (2000, 360) nach Anspruch 7, wobei das zentrale Gateway (210) den Steuerbefehl nur dann an die elektronische Steuereinheit (220) überträgt, wenn Vorbedingungen vorbestimmte Anforderungen erfüllen, wobei die Vorbedingungen einen Fahrzeugnetzverbindungszustand und einen aktuellen Fahrzeugstatus umfassen.

9. Intelligentes Fahrzeug (2000, 360) nach Anspruch 7, wobei die elektronische Steuereinheit (220) nach der Ausführung des Steuerbefehls eine Ausführungsbestätigungsnachricht an das zentrale Gateway (210) sendet.

10. Intelligentes Fahrzeug (2000, 360) nach Anspruch 9, wobei das zentrale Gateway (210) ferner dafür ausgelegt ist, die Ausführungsbestätigungsnachricht einzukapseln und die eingekapselte Ausführungsbestätigungsnachricht gemäß dem "Message Queuing Telemetry Transport"-, MQTT-, Protokoll zu pushen.

11. Intelligentes Fahrzeug (2000, 360) nach Anspruch 10, wobei das zentrale Gateway (210) ferner dafür ausgelegt ist, das Ergebnis des Pushens gemäß dem MQTT-Protokoll zu überwachen, wobei, wenn die Zeit für das Pushen eine vorbestimmte Zeit überschreitet, das zentrale Gateway (210) dafür ausgelegt ist, den Steuerbefehl erneut an die elektronische Steuereinheit (220) zur erneuten Ausführung zu übertragen.

12. Telematikdienstanbieter, TSP, (340, 4000), wobei der TSP (340, 4000) einen ersten sicheren Kommunikationskanal mit einer intelligenten Vorrichtung (320) und einen zweiten sicheren Kommunikationskanal mit einem Fahrzeug (360) aufbaut, wobei der TSP (340, 4000) folgende Elemente umfasst:
eine entfernte Fahrzeugdienstkomponente (420), die dafür ausgelegt ist, von der intelligenten Vorrichtung (320) und über den ersten sicheren Kommunikationskanal eine erste Anforderung zu empfangen, die einen Steuerbefehl für das Fahrzeug (360) und Benutzerinformationen umfasst, und die erste Anforderung unter Verwendung eines Protokollpuffer-, Protobuf-, Protokolls einzukapseln; und
eine Nachrichtenplattform (440), die dafür ausgelegt ist, die eingekapselte erste Anforderung von der entfernten Fahrzeugdienstkomponente (420) zu empfangen und diese über den zweiten sicheren Kommunikationskanal mittels eines "Message Queuing Telemetry Transport"-, MQTT-, Protokolls an das Fahrzeug (360) zu pushen, wobei der TSP (340, 4000) und das Fahrzeug (360) unter Verwendung eines Namens für einen privaten Zugangspunkt miteinander kommunizieren und Zwei-Wege-Verifizierung unter Verwendung eines "Transport Layer Security"-, TLS-, Protokolls oder eines "Secure Sockets Layer"-, SSL-, Protokolls durchführen.

13. Telematikdienstanbieter, TSP, (340, 4000) nach Anspruch 12, wobei die entfernte Fahrzeugdienstkomponente (420) dafür ausgelegt ist, Authentifizierung und Bestimmung von Vorbedingungen gemäß der ersten Anforderung durchzuführen, wobei die Vorbedingungen einen Fahrzeugnetzverbindungszustand und einen aktuellen Fahrzeugstatus umfassen.

14. Telematikdienstanbieter, TSP, (340, 4000) nach Anspruch 13, wobei nach dem Durchführen der Authentifizierung und der Bestimmung von Vorbedingungen die entfernte Fahrzeugdienstkomponente (420) dafür ausgelegt ist, eine eindeutige ID zu erzeugen, die der ersten Anforderung entspricht, die eindeutige ID an die intelligente Vorrichtung (320) zurückzugeben und Informationen in der ersten Anforderung in eine Datenbank zur Abfrage durch die intelligente Vorrichtung (320) zu schreiben.

## Revendications

1. Procédé (1000) de commande à distance d'un véhicule (360) sur la base d'un dispositif intelligent (320), le procédé comprenant :
l'établissement (120) d'un canal de communication sécurisé entre le dispositif intelligent (320) et un fournisseur de service télématique, TSP, (340, 4000) ; et
l'envoi (140), lorsqu'une fonction de commande à distance destinée à une application du dispositif intelligent (320) est déclenchée, d'une première demande du dispositif intelligent (320) au TSP (340, 4000) par l'intermédiaire du canal de communication sécurisé, de telle sorte que le TSP (340, 4000) encapsule ensuite la première demande par utilisation d'un protocole de tampon de protocole, Protobuf, et pousse la première demande vers le véhicule (360) au moyen d'un protocole de transport de télémétrie par file d'attente de messages, MQTT, la première demande comprenant une instruction de commande destinée au véhicule (360) et des informations d'utilisateur,
dans lequel le TSP (340, 4000) et le véhicule (360) communiquent l'un avec l'autre en utilisant un nom de point d'accès privé, et effectuent une vérification bidirectionnelle en utilisant un protocole de sécurité de couche de transport, TLS, ou un protocole de couche de connexion sécurisée, SSL, et
dans lequel le canal de communication sécurisé est un canal de vérification TLS bidirectionnel, qui effectue une vérification bidirectionnelle sur la base d'un réseau cellulaire et en utilisant le protocole de sécurité de couche transport, TLS.

2. Procédé (1000) selon la revendication 1, comprenant en outre :
la réception, par le dispositif intelligent (320), d'un certificat d'utilisateur TLS indépendant émis par une infrastructure à clé publique, PKI, avant que le canal de communication sécurisé soit établi.

3. Procédé (1000) selon la revendication 1, comprenant en outre :
la demande, par l'application du dispositif intelligent (320), à un utilisateur d'effectuer une vérification à l'aide d'un mot de passe gestuel ou d'un mot de passe par empreinte digitale lorsque l'application est ramenée d'un système dorsal à un système frontal.

4. Procédé (1000) la revendication 1, comprenant en outre :
la réception d'un résultat d'exécution d'ordre en provenance du TSP (340, 4000), et la mise à jour de l'état du véhicule (360) avec l'application du dispositif intelligent (320) si le résultat d'exécution d'ordre indique que l'instruction de commande s'est exécutée avec succès, sinon, l'indication à l'utilisateur de la raison de l'échec.

5. Procédé (1000) selon la revendication 1, comprenant en outre :
l'émission d'une requête vers le TSP (340, 4000) par le dispositif intelligent (320) de manière active si le dispositif intelligent (320) n'a pas reçu de réponse en provenance du TSP (340, 4000) avant une période de temps prédéterminée après que la première demande a été envoyée au TSP (340, 4000).

6. Support de stockage informatique comprenant des instructions informatiques qui, lorsqu'elles sont exécutées, mettent en œuvre le procédé (1000) de commande à distance d'un véhicule (360) selon l'une quelconque des revendications 1 à 5.

7. Véhicule intelligent (2000, 360), **caractérisé en ce qu'**il comprend :
une passerelle centrale (210) configurée pour établir un canal de vérification TLS bidirectionnel avec un fournisseur de service télématique (340, 4000), de telle sorte que la passerelle centrale (210) et le TSP (340, 4000) communiquent l'un avec l'autre en utilisant un nom de point d'accès privé, et effectuent une vérification bidirectionnelle en utilisant un protocole de sécurité de couche de transport, TLS, ou un protocole de couche de connexion sécurisée, SSL, dans lequel la passerelle centrale (210) est configurée pour recevoir, en provenance du TSP (340, 4000), une première demande qui est poussée au moyen d'un protocole de transport de télémétrie par file d'attente de messages, MQTT, la première demande comprenant une instruction de commande destinée au véhicule (360) et des informations d'utilisateur et étant encapsulée par le TSP (340, 4000) par utilisation d'un protocole de tampon de protocole, Protobuf, et la passerelle centrale (210) est en outre configurée pour analyser l'instruction de commande destinée au véhicule (360) à partir de la première demande et la transférer à une unité de commande électronique (220) ; et
l'unité de commande électronique (220) est configurée pour recevoir l'instruction de commande destinée au véhicule (360) en provenance de la passerelle centrale (210) et effectuer une opération correspondante.

8. Véhicule intelligent (2000, 360) selon la revendication 7, dans lequel la passerelle centrale (210) ne transfère l'instruction de commande à l'unité de commande électronique (220) que lorsque des conditions préalables satisfont à des exigences prédéterminées, les conditions préalables comprenant un état de connexion de réseau de véhicule et un état de véhicule actuel.

9. Véhicule intelligent (2000, 360) selon la revendication 7, dans lequel l'unité de commande électronique (220) envoie un message de confirmation d'exécution à la passerelle centrale (210) après l'exécution de l'instruction de commande.

10. Véhicule intelligent (2000, 360) selon la revendication 9, dans lequel la passerelle centrale (210) est en outre configurée pour encapsuler le message de confirmation d'exécution et pousser le message de confirmation d'exécution encapsulé conformément au protocole de transport de télémétrie par file d'attente de messages, MQTT.

11. Véhicule intelligent (2000, 360) selon la revendication 10, dans lequel la passerelle centrale (210) est en outre configurée pour surveiller le résultat du pousser conformément au protocole MQTT, dans lequel, si le temps de pousser dépasse un temps prédéterminé, la passerelle centrale (210) est configurée pour transférer à nouveau l'instruction de commande à l'unité de commande électronique (220) en vue d'une nouvelle exécution.

12. Fournisseur de service télématique, TSP, (340, 4000), le TSP (340, 4000) établissant un premier canal de communication sécurisé avec un dispositif intelligent (320) et établissant un second canal de communication sécurisé avec un véhicule (360), le fournisseur de service télématique (340, 4000) comprenant :
un composant de service de véhicule à distance (420) configuré pour recevoir, en provenance du dispositif intelligent (320) et par l'intermédiaire du premier canal de communication sécurisé, une première demande comprenant une instruction de commande destinée au véhicule (360) et des informations d'utilisateur, et encapsuler la première demande par utilisation d'un protocole de tampon de protocole (Protobuf) ; et
une plate-forme de messages (440) configurée pour recevoir la première demande encapsulée en provenance du composant de service de véhicule à distance (420) et la pousser vers le véhicule (360) par l'intermédiaire du second canal de communication sécurisé au moyen d'un protocole de transport de télémétrie par file d'attente de messages, MQTT, dans lequel le TSP (340, 4000) et le véhicule (360) communiquent l'un avec l'autre en utilisant un nom de point d'accès privé, et effectuent une vérification bidirectionnelle en utilisant un protocole de sécurité de couche de transport, TLS, ou un protocole de couche de connexion sécurisée, SSL.

13. Fournisseur de service télématique, TSP, (340, 4000) selon la revendication 12, dans lequel le composant de service de véhicule à distance (420) est configuré pour effectuer une authentification et une détermination de conditions préalables conformément à la première demande, les conditions préalables comprenant un état de connexion de réseau de véhicule et un état de véhicule actuel.

14. Fournisseur de service télématique (340, 4000) selon la revendication 13, dans lequel, après que l'authentification et la détermination de conditions préalables ont été effectuées, le composant de service de véhicule à distance (420) est configuré pour générer un ID unique correspondant à la première demande, renvoyer l'ID unique au dispositif intelligent (320) et écrire des informations de la première demande dans une base de données pour une interrogation par le dispositif intelligent (320).
